# EUROPEAN PATENT SPECIFICATION

(11) **EP 2 363 056 B1**
(45) Date of publication and mention of the grant of the patent: **07.11.2012**
(21) Application number: 11001609.4
(22) Date of filing: 28.02.2011
(51) Int. Cl.: A47L 15/42

(54) **Electrical household appliance**
Elektrisches Haushaltgerät
Appareil électroménager

(30) Priority: 02.03.2010 IT RN20100005
(43) Date of publication of application: 07.09.2011
(73) Proprietor: Indesit Company S.p.A., 60044 Fabriano (AN) (IT)
(72) Inventor: Lippera, Mario, 60043 Cerreto d' Esi (Ancona) (IT)
(74) Representative: Monelli, Alberto

(56) References cited:
- EP-A1- 1 702 551
- EP-A2- 0 101 048
- EP-A2- 1 151 717
- WO-A1-2004/056256
- WO-A2-2006/092598
- DE-U1- 29 914 825
- US-A1- 2008 008 430

## Description

This invention relates to a method for applying a light guide to a system, said system comprising a fully integrated dishwasher.

Document WO 2004/096256 discloses a domestic appliance including a cover element, an optical operation indicator that can be covered by the cover element and a fibre optic coupled to the optical operation indicator for transmitting a emitted light signal.

Fully integrated dishwashers are known in the prior art. Fully integrated dishwashers are known by this name because they are often subjected to an operation by an operator in the fitted kitchen trade to adapt them in such a way that certain typical components of traditional dishwashers, such as the user interface, for example, are hidden from view. Normally, a cover panel is applied to the door of the dishwasher. The cover panel matches the decorative scheme of the cabinets adjacent to the appliance. Above the dishwasher, there is normally a work top integrated in the cabinetry adjacent to the dishwasher and under which the dishwasher fits snugly. The work top is normally physically connected to the dishwasher but the dishwasher might also be simply inserted under the work top and a few centimetres clear of it. The control devices of the dishwasher are built into a perimeter edge of the door. When the door is closed, the control devices are not accessible to the user on account of the front cover panel and the work top. The user thus sets the washing parameters with the door open and only after closing the door starts the dishwasher washing cycle. One problem typical of this type of dishwasher is the difficulty of communicating information between the dishwasher and the user when the door is closed. One drawback that is felt particularly strongly is connected with the end of washing cycle signal emitted by the dishwasher (also in view of the fact that dishwashers are more and more silent in operation and the user finds it increasingly difficult to hear whether or not the washing cycle has come to an end). Opening the door before the dishwasher has ended the washing cycle is best avoided. In effect, despite the presence of safety devices which bring the washing cycle to an immediate stop when the door is opened, there is always the risk of the user or the surrounding furniture being struck by a spray of hot water. The possibility of opening the door during the washing cycle must first of all be possible for only then is it possible for the user to communicate with the machine (for example to interrupt the washing cycle half way through, to change the set wash program, etc.).. Washing appliances are known which comprise a rigid light guide applied to the work top. The light guide extends at least partly in the space between the work top and the upper edge of the door (when the latter is in the closed position). The light guide comprises an inlet facing the upper edge of the door where a warning light is mounted to indicate when a certain condition occurs. The light guide also comprises a front outlet facing the user. Thus, the light guide makes available to the user information (for example, the end of a washing cycle) which would not otherwise be able to be communicated through a visual signal.

One drawback of these dishwashers is that the gap between the upper edge of the door (when the latter is closed) and the work top is not fixed but, on the contrary, may vary considerably. Generally speaking, for aesthetic purposes, the gap must be as narrow as possible. In some cases, therefore, the light guide may be too large to be inserted into the gap between the work top and the upper edge of the door.

In this context, the technical purpose which forms the basis of this invention is to propose a method that overcomes the above mentioned drawbacks of the prior art.

More specifically, this invention has for an aim to provide a method for applying a light guide which offers the highest level of adaptability to the widest possible range of different situations in which it can be applied.

The technical purpose indicated and the aims specified are substantially achieved by a method comprising the technical features described in one or more of the appended claims.

Further features and advantages of the invention are more apparent in the non-limiting description which follows of a preferred non-limiting embodiment of a method illustrated in the accompanying drawings, in which:

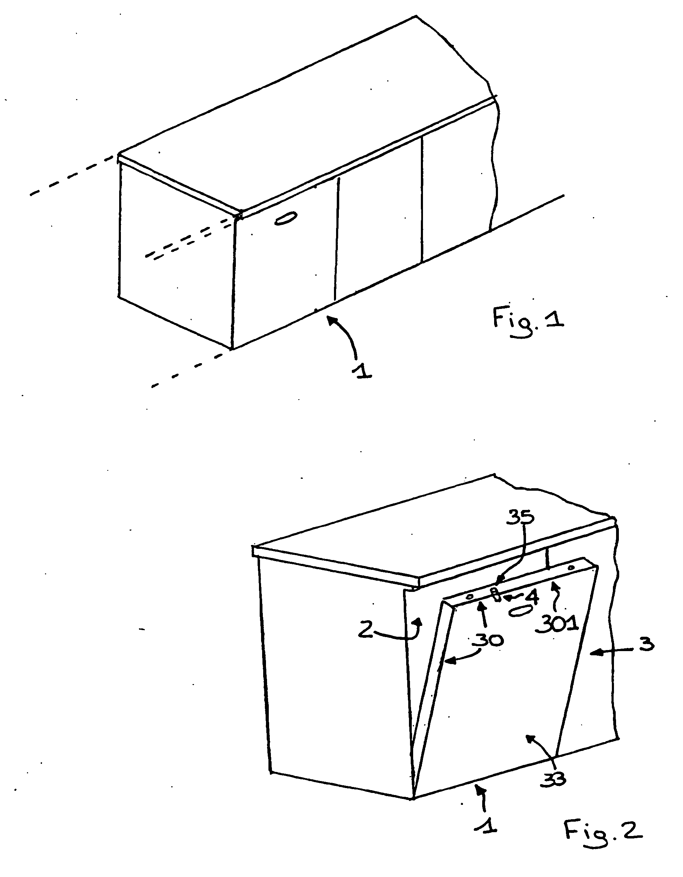

- Figure 1 is a partly interrupted view, with some parts (shown by dashed lines) cut away in order to better illustrate others, of a fully integrated electrical household appliance;
- Figure 2 shows the electrical household appliance of Figure 1 with the door open;

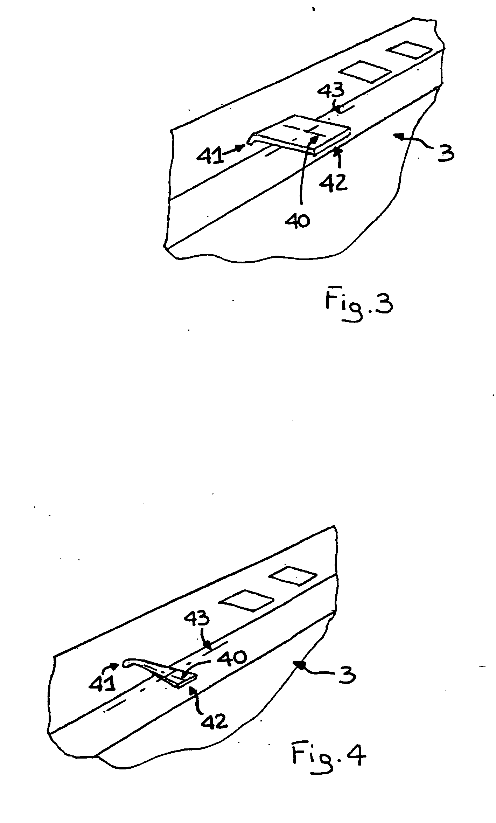

- Figures 3 and 4 illustrate two alternative details of an electrical household appliance;
- Figures 5 and 6 illustrate two alternative details of an electrical household appliance.

With reference to the accompanying drawings, the numeral 1 denotes an electrical household appliance.

More specifically, the electrical household appliance 1 is an integrated electrical household appliance. Preferably, the electrical household appliance 1 is of the fully integrated type. Advantageously, the electrical household appliance 1 is a dishwasher (see embodiment illustrated). In an alternative embodiment, the electrical household appliance 1 might be a refrigerator or an oven.

The electrical household appliance 1 comprises:
- a working compartment 2 for product treatment;
- a door 3 giving access to the compartment 2. The door 3 is movable at least between an open position where it allows access to the working compartment 2 and a closed position where it prevents access to the working compartment 2. The door 3 comprises a first face 32 directed towards the compartment 2 when the door 3 is in the closed configuration and a second face 33 facing in the opposite direction (typically covering the front of the electrical household appliance 1). The door 3 comprises at least two elements placed face to face: one of the two elements is a functional element 36 which (when the door 3 is closed) sealingly closes the compartment 2; the second element is an aesthetic covering 37. The aesthetic covering 37 is applied to the functional element 36 on the side opposite the one that delimits the compartment 2. The second face 33 is integrated in the aesthetic covering 37. For example, the aesthetic covering 37 is a panel made of wood or laminate. The first and the second face 32 and 33 are substantially planar and are advantageously parallel to each other.

The door 3 comprises a perimeter edge 30. Conveniently, the perimeter edge 30 is interposed between the first and second faces 32 and 33.

The door 3 comprises a warning light 35. The latter is advantageously located on the perimeter edge 30. For example, the warning light 35 is a LED. Normally, when the door 3 is in the closed position, the warning light 35 is not visible to a user.

The electrical household appliance 1 also comprises a light guide 4 applied to the edge 30 of the door 3. The light guide 4 extends along a line of extension 40 between an inlet 41 and an outlet 42. The inlet 41 directed towards a luminous signal emittable by the warning light 35. More specifically, the inlet 41 faces the warning light 35. The outlet 42 is directed towards a reference plane 34 which fronts the door 3 in the closed position. Conveniently, the reference plane 34 is substantially parallel to the door 3 in the closed position. The reference plane 34 is external to the compartment 2. In a dishwasher the light guide 4 and the warning light 35 form part of signalling means for indicating the progress of the washing cycle. More specifically, the light guide 4 and the warning light 35 form part of signalling means for indicating the end of the washing cycle. The light guide 4 and the warning light 35 might, however, also form part of signalling means for indicating other information about the washing cycle and/or, more generally, about the electrical household appliance 1. To distinguish between different items of information, each item of information might be associated with a light signal having a predetermined colour and/or a specific luminous intensity and/or a specific flashing frequency. Conveniently, the light guide 4 is deformable. The pressure necessary to deform the light guide 4 is such that it can be applied manually. The light guide 4 is deformable at ambient temperature. More specifically, the light guide 4 is flexible. It can therefore be bent. The light guide 4 can be shaped manually. Advantageously, the above mentioned characteristics derive from the inherent properties of the material the light guide 4 is made of.

In a first embodiment, the line of extension 40 of the light guide 4 is deformable. Preferably, at least one section 43 of the light guide 4 is deformable, the section 43 being at right angles to the line of extension 40.

A preponderant stretch of the light guide 4 has a section 43 which is at right angles to the line of extension 40 and manually deformable.

Conveniently, any section 43 of the light guide 4 is manually deformable, the section 43 being at right angles to the line of extension 40.

The deformability of the light guide 4 in general and, in particular, of the at least one section of it 43 makes it easier to position the light guide 4 even in confined spaces. In a first embodiment, the light guide 4 can be modelled, since it is sufficiently rigid to maintain the configuration adopted after being deformed. More specifically, the light guide 4 is sufficiently rigid to maintain the configuration adopted by the line of extension 40. That makes it possible to prevent the line of extension 40 of the light guide 4 from sagging as a result of gravity under the weight of the light guide 4 itself (for example, in the stretches where the light guide 4 is not supported by the edge 30 of the door 3). The end user can therefore reversibly modify the shape of the light guide 4.

Preferably, the light guide 4 extends uninterruptedly along the line of extension 40 and/or at right angles to the line of extension 40.

Advantageously, the light guide 4 is made of polymethylmethacrylate (PMMA). The light guide 4 might also be a flexible optic fibre.

In one particular embodiment, the light guide 4, after being deformed, substantially returns to the configuration it had prior to being deformed. In this case, it has a shape memory. The light guide 4 might thus have a substantially elastic behaviour. The light guide 4 is applied to a first side 301 of the perimeter edge 30 of the door 3. Conveniently, the first side 301 is the side of the perimeter edge 30 which is directed upwards when the door 3 is in the closed configuration (alternatively, the first side 301 might be one of the sides of the perimeter edge 30 which laterally delimit the door 3 or the side of the perimeter edge 30 which is directed downwards when the door 3 is in the closed configuration; in the latter case, the floor in front of the electrical household appliance 1 might be conveniently used as a projection surface). Advantageously, the inlet section 41 of the light guide 4 is smaller in surface area than the outlet section 42 of the light guide 4. That makes it possible for the controls and warning lights on the edge 30 of the door 3 to be concentrated while at the same time allowing a larger, and hence more easily visible, luminous outlet to be obtained. Preferably, at least one stretch of the light guide 4 along the line of extension 40 is therefore flared. More specifically, along that stretch, the section 43 which is at right angles to the line of extension increases with distance away from the inlet 41 and towards the outlet 42.

There might be a plurality of warning lights 35, each transmitting a predetermined signal. A respective light guide 4 might be associated with each of at least two warning lights 35. Alternatively, for a plurality of warning lights (for all the warning lights 35 or for a subset of them) there might be a single light guide 4 able to carry the light emitted by the plurality of warning lights. In that case, the light emitted by the warning lights is different in colour and/or intensity and/or flashing frequency so as to allow it to be distinguished by a user.

Conveniently, the electrical household appliance 1 comprises means 5 for mechanically fitting the light guide 4 to the door 3. The mechanical fit means 5 typically operate by interference.

In the preferred embodiment, the mechanical interference fit means 5 comprise a housing 50 formed along the edge 30. In one particular embodiment, the housing 50 also accommodates the warning light 35. A portion of the light guide 4, in particular the inlet 41 of the light guide, is insertable into the housing 50.

The mechanical interference fit means 5 perform a plurality of functions:
- they prevent infiltrations of water into the housing 50 where the warning light 35 is located (an electrically live zone);
- they allow easy fitting;
- they allow little dispersion of the light emitted by the warning light 35 since the inlet of the light guide 4 directly faces the warning light 35.

Advantageously, the mechanical fit means 5 are of the unremovable type so as to prevent direct user access to the electrical section in the event of removal of the light guide 4. Alternatively, the mechanical fit means 5 might be at least partly removable to facilitate cleaning of the light guide 4 and/or of the removable components of the mechanical fit means 5 in order to remove dirt that might obstruct the passage of the light.

Normally, there are no intermediate optical means such as mirrors, lenses, etc. interposed between the light guide 4 and the warning light 35. This guarantees greater constructional simplicity for the electrical household appliance 1 but without limiting the scope of the invention. The application of optical means between the light guide 4 and the warning light 35 is in any case possible.

At least one portion of the light guide 4 can be cut with a cutting tool, in particular a hand-operated cutting tool such as a pair of steel scissors. This allows the shape of the light guide 4 to be adapted to suit the preferences of the user and to match the scheme in which the light guide 4 is installed.

Advantageously, the light guide 4 can be cut with a cutting tool transversally to the line of extension 40.

Advantageously, the user can cut the light guide 4 to give it a desired shape, for example to make the flared stretch of the light guide 4 along the line of extension 40.

A system is further described:
- a fully integrated electrical household appliance 1 having one or more of the technical features described above;
- covering means 6 which, when the door 3 is in the closed position, cover part of the edge 30 the light guide 4 is applied to.

The covering means 6 comprise a first portion 60 which, when the door 3 is in the closed position, surmounts vertically (relative to the physical vertical) the portion of the edge 30 of the door 3 the light guide 4 is applied to.

The covering means 6 comprise a protrusion 61 which projects from at least a first part 62 of the first portion 60 of the covering means 6. The protrusion 61 projects towards the reference plane 34 as far as an imaginary vertical plane 600. The reference plane 34 is substantially parallel to the imaginary vertical plane 600. The imaginary vertical plane 600 is substantially parallel to a plane in which the door 3, when it is in the closed configuration, extends.

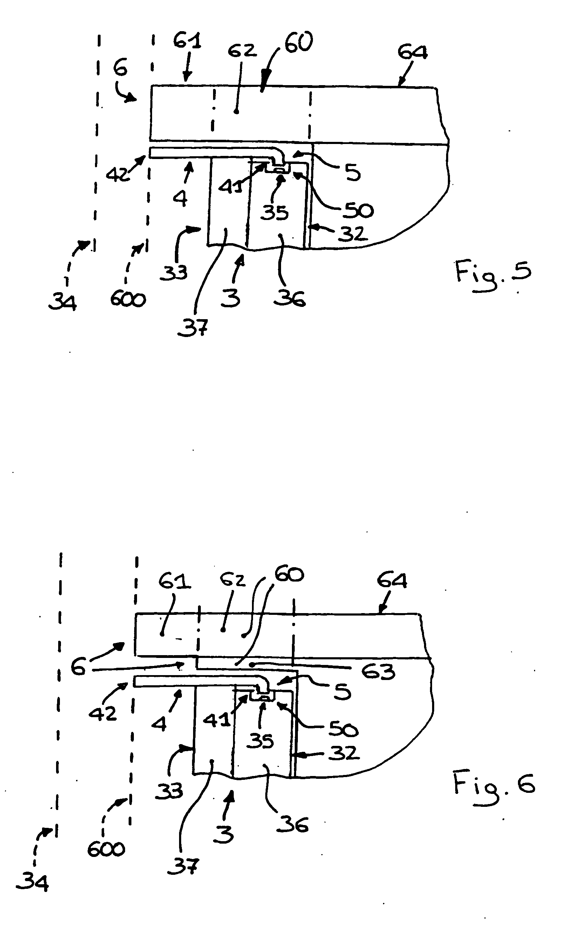

In a first embodiment, a zone 63 of the first portion 60 of the covering means 6 (separate from the first part 62) forms part of the electrical household appliance 1. The zone 63 faces the electrical household appliance 1 edge 30 the light guide 4 is applied to. Advantageously, the zone 63 is integrated in the casing of the electrical household appliance 1 (see Figure 6). The first part 62 of the first portion 60 and the protrusion 61 might, instead, form part of a work top 6 external to the electrical household appliance 1 and not integrated in the casing of the electrical household appliance 1 (see Figure 5).

In this embodiment, the covering means 6 are completely external to the electrical household appliance 1 and are not integrated in the casing of the electrical household appliance 1. In this case, the covering means 6 comprise a work top 64 under which the electrical household appliance 1 can be inserted. Advantageously, the work top 64 is shared with the cabinets adjacent to the electrical household appliance 1.

When the door 3 is in the closed position, the light guide 4 projects from the door 3 at least as far as the vertical imaginary plane 600. The light guide 4 can be cut with a cutting tool (preferably a pair of steel scissors) transversally to the line of extension 40 at the vertical imaginary plane 600.

This invention has for an object a method for applying a light guide 4 to a system having one or more of the features outlined above. The method comprises the following steps:
- opening the door 3 at least partially;
- positioning the inlet section 41 of the light guide 4 at the warning light 35;
- closing the door 3.

Closing the door 3 causes the light guide 4 to come into contact with the covering means 6 and thus to deform the light guide 4 in such a way that it fits snugly into the space between the door 3 and the covering means 6. More specifically, when the door 3 is closed, the light guide 4 can occupy the free space in the space between the door 3 and the covering means 6.

The method also comprises the step of cutting the light guide 4 at the imaginary vertical plane 600. This avoids making unattractive extensions of the light guide 4 projecting beyond the edge of the protrusion 61. At the same time, it allows a light beam to be obtained which is projected freely into the surrounding space. On the other hand, if the light guide 4 terminated behind the edge of the protrusion 61 (precisely on account of the latter) the light signal emitted would be much more difficult to see from points located at heights above the outlet 42 of the light guide 4. This invention has important advantages.

First of all, it makes the light guide 4 very easy to adapt to the space available. This is particularly advantageous because it means the electrical household appliance 1 is more adaptable to dimensional constraints, in particular the constraints due to the work top placed over the appliance (at a predetermined and invariable height) by a fitted kitchen installer.

Also, the shape of the light guide 4 can be modified by the end user.

It shall be understood that the invention described above may be modified and adapted in several ways without departing from the scope of the inventive concept, according to the appended claims. Moreover, all the details of the invention may be substituted by other technically equivalent elements. In practice, all the materials used, as well as the dimensions, may vary according to requirements.

## Claims

1. A method for applying a light guide to a system, said system comprising:
i) a fully integrated electrical household appliance (1), said electrical household appliance comprising:
- a working compartment (2) for product treatment;
- a door (3) giving access to the compartment (2), the door (3) comprising a perimeter edge (30) and a warning light (35); the door (3) being movable at least between an open position where it allows access to the working compartment (2) and a closed position where it prevents access to the working compartment (2);
- a deformable light guide (4) applied to the edge of the door and extending along a line of extension (40) between an inlet of it (41) directed towards a luminous signal emittable by the warning light (35) and an outlet of it (42) directed towards a reference plane (34) which fronts the door (3) in the closed position;
ii) covering means (6) which, when the door (3) is in the closed position, cover part of the edge (30) the light guide (4) is applied to;
said method for applying a light guide to said system comprising the following steps:
- opening the door (3) at least partially;
- positioning the inlet (41) of the light guide (4) at the warming light (4);
said method being **characterized by** the further step of:
- closing the door (3), this step causing the light guide (4) to come into contact with the covering means (6) and thus to deform the light guide (4) in such a way that it fts snugly into the space between the door (3) and the covering means (6).

2. The method according to claim 1, wherein at least one section (43) of the light guide (4), at right angles to the line of extension (40), is deformable.

3. The method according to claim 1 or 2, wherein any section (43) of the light guide (4), at right angles to the line of extension (40), is deformable.

4. The method according to any of the foregoing claims, wherein the light guide (4) can be modelled, since it is sufficiently rigid to maintain the configuration adopted after being deformed.

5. The method according to any of the foregoing claims, wherein the surface of the light guide (4) inlet (41) is smaller in area than the surface of the light guide (4) outlet (42).

6. The method according to any of the foregoing claims, wherein the electrical household appliance comprises means (5) for mechanically fitting the light guide (4) to the door (3) by interference.

7. The method according to claim 6, wherein the mechanical interference fitting means (5) comprise a housing (50) formed along the edge (30), the light guide (4) inlet (41) being insertable in the housing (50).

8. The method according to any of the foregoing claims, wherein at least one portion of the light guide (4) can be cut out with a cutting tool.

9. The method according to any of the foregoing claims, wherein the electrical household appliance is a fully integrated dishwasher, the warning light (35) and the light guide (4) forming part of means for indicating the progress of the washing cycle.

10. The method according to any of the foregoing claims, wherein:
- the covering means (6) comprise a first portion (60) which, when the door (3) is in the closed position, vertically surmounts the door (3) edge (30) the light guide (4) is applied to;
- the covering means (6) comprise a protrusion (61) which projects from at least a first part (62) of the first portion (60) of the covering means (6), the protrusion (61) projecting towards the reference plane (34) as far as an imaginary vertical plane (600);
- when the door (3) is in the closed position, the light guide (4) projects from the edge (30) of the door (3) at least as far as the vertical imaginary plane (600), it being possible to cut the light guide (4) with a cutting tool transversally of the line of extension (40) at the vertical imaginary plane (600);
the method comprising the step of cutting the light guide (4) at the imaginary vertical plane (600).

11. The method according to claim 10, **characterized in that** a zone (63) of the first portion (60) of the covering means (6) forms part of the electrical household appliance (1) and faces the electrical household appliance (1) edge (30) the light guide (4) is applied to.

## Patentansprüche

1. Verfahren zum Anbringen eines Lichtleiters an einem System, wobei das System Folgendes umfasst:
i) ein vollintegriertes elektrisches Haushaltsgerät (1), wobei das elektrische Haushaltsgerät Folgendes umfasst:
- ein Betriebsfach (2) zur Behandlung von Produkten;
- eine Tür (3), die einen Zugriff auf das Fach (2) ermöglicht, wobei die Tür (3) einen Umfangsrand (30) und ein Warnlicht (35) umfasst; wobei die Tür (3) zwischen mindestens einer offenen Position, in der sie ein Zugriff auf das Betriebsfach (2) ermöglicht, und einer geschlossenen Position, in der sie ein Zugriff auf das Betriebsfach (2) verhindert, beweglich ist;
- einen verformbaren Lichtleiter (4), der am Rand der Tür angebracht ist und sich entlang einer Ausdehnungslinie (40) zwischen seinem Eintritt (41), der auf ein vom Warnlicht (35) ausgebbares Lichtsignal gerichtet ist, und seinem Austritt (42), der auf eine Bezugsebene (34) gerichtet ist, die der Tür (3) in der geschlossenen Position gegenüberliegt, erstreckt;
ii) Abdeckmittel (6), die einen Teil des Randes (30), an dem der Lichtleiter (4) angebracht ist, abdecken, wenn die Tür (3) in der geschlossenen Position ist; wobei das Verfahren zum Anbringen eines Lichtleiters am System die folgenden Schritte umfasst:
- zumindest teilweises Öffnen der Tür (3);
- Positionieren des Eintrittes (41) des Lichtleiters (4) am Warnlicht (4);
wobei das Verfahren durch den folgenden weiteren Schritt gekennzeichnet ist:
- Schließen der Tür (3), wobei dieser Schritt dazu führt, dass der Lichtleiter (4) in Kontakt mit den Abdeckmitteln (6) kommt und somit der Lichtleiter (4) verformt wird, sodass er am Zwischenraum zwischen der Tür (3) und den Abdeckmitteln (6) satt anliegt.

2. Verfahren nach Anspruch 1, wobei mindestens ein Bereich (43) des Lichtleiters (4), der rechtwinklig zur Ausdehnungslinie (40) ist, verformbar ist.

3. Verfahren nach Anspruch 1 oder 2, wobei ein beliebiger Bereich (43) des Lichtleiters (4), der rechtwinklig zur Ausdehnungslinie (40) ist, verformbar ist.

4. Verfahren nach einem der vorangehenden Ansprüche, wobei der Lichtleiter (4) modelliert werden kann, da er eine ausreichende Starrheit aufweist, um die Konfiguration aufrechtzuerhalten, die nach der Verformung eingenommen wurde.

5. Verfahren nach einem der vorangehenden Ansprüche, wobei die Oberfläche des Eintrittes (41) des Lichtleiters (4) eine kleinere Fläche als die Oberfläche des Austrittes (42) des Lichtleiters (4) aufweist.

6. Verfahren nach einem der vorangehenden Ansprüche, wobei das elektrische Haushaltsgerät Mittel (5) zur mechanischen Passung des Lichtleiters (4) an der Tür (3) durch Übermaß umfasst.

7. Verfahren nach Anspruch 6, wobei die Mittel (5) zur mechanischen Übermaßpassung ein Gehäuse (50) umfassen, das entlang dem Rand (30) ausgebildet ist, wobei der Eintritt (41) des Lichtleiters (4) in das Gehäuse (50) einführbar ist.

8. Verfahren nach einem der vorangehenden Ansprüche, wobei mindestens ein Abschnitt des Lichtleiters (4) mit einem Schneidwerkzeug zugeschnitten werden kann.

9. Verfahren nach einem der vorangehenden Ansprüche, wobei das elektrische Haushaltsgerät eine vollintegrierte Geschirrspülmaschine ist, wobei das Warnlicht (35) und der Lichtleiter (4) einen Teil von Mitteln zur Angabe des Fortschrittes des Waschzyklus bilden.

10. Verfahren nach einem der vorhergehenden Ansprüche, wobei:
- die Abdeckmittel (6) einen ersten Abschnitt (60) umfassen, der, wenn die Tür (3) in der geschlossenen Position ist, den Rand (30) der Tür (3), an dem der Lichtleiter (4) angebracht ist, vertikal überragt;
- die Abdeckmittel (6) einen Vorsprung (61) umfassen, der von mindestens einem ersten Teil (62) des ersten Abschnitts (60) der Abdeckmittel (6) hervorragt, wobei der Vorsprung (61) zur Bezugsebene (34) so weit wie eine imaginäre Vertikalebene (600) hervorragt;
- der Lichtleiter (4), wenn die Tür (3) in der geschlossenen Position ist, vom Rand (30) der Tür (3) zumindest so weit wie die imaginäre Vertikalebene (600) hervorragt, wobei es möglich ist, den Lichtleiter (4) mit einem Schneidwerkzeug transversal zur Ausdehnungslinie (40) an der imaginären Vertikalebene (600) zuzuschneiden;
wobei das Verfahren den Schritt des Zuschneidens des Lichtleiters (4) an der imaginären Vertikalebene (600) umfasst.

11. Verfahren nach Anspruch 10, **dadurch gekennzeichnet, dass** eine Zone (63) des ersten Abschnitts (60) der Abdeckmittel (6) einen Teil des elektrischen Haushaltsgerätes (1) bildet und dem Rand (30) des elektrischen Haushaltsgerätes (1) zugewandt ist, an dem der Lichtleiter (4) angebracht ist.

## Revendications

1. Procédé pour appliquer un conduit de lumière à un système, ledit système comprenant :
i) un appareil électroménager entièrement intégré (1), ledit appareil électroménager comprenant :
- un compartiment fonctionnel (2) pour le traitement de produits ;
- une porte (3) permettant l'accès au compartiment (2), la porte (3) comprenant un pourtour (30) et une lampe témoin (35) ; la porte (3) étant amovible au moins entre une position d'ouverture dans laquelle elle permet l'accès au compartiment fonctionnel (2) et une position de fermeture dans laquelle elle empêche l'accès au compartiment fonctionnel (2) ;
- un conduit de lumière déformable (4) appliqué au bord de la porte et se développant le long d'une ligne de développement (40) entre une entrée propre à celui-ci (41) orientée vers un signal lumineux pouvant être émis par la lampe témoin (35) et une sortie propre à celui-ci (42) dirigée vers un plan de référence (34) qui fait face à la porte (3) dans la position de fermeture ;
ii) des moyens de couverture (6) qui, lorsque la porte (3) se trouve dans la position de fermeture, couvrent une partie du bord (30) auquel est appliqué le conduit de lumière (4) ;
ledit procédé pour appliquer un conduit de lumière au dit système, comprenant les étapes suivantes :
- l'ouverture de la porte (3) au moins partiellement ;
- le positionnement de l'entrée (41) du conduit de lumière (4) au niveau de la lampe témoin (4) ;
ledit procédé étant **caractérisé par** l'étape supplémentaire suivants :
- la fermeture de la porte (3), cette étape occasionnant la mise en contact du conduit de lumière (4) avec les moyens de couverture (6) et donc la déformation du conduit de lumière (4) de telle sorte à ce qu'il s'ajuste dans l'espace entre la porte (3) et les moyens de couverture (6).

2. Procédé selon la revendication 1, dans lequel au moins une section (43) du conduit de lumière (4), à angles droits par rapport à la ligne de développement (40), est déformable.

3. Procédé selon la revendication 1 ou 2, dans lequel toute section (43) du conduit de lumière (4), à angles droits par rapport à la ligne de développement (40), est déformable.

4. Procédé selon l'une quelconque des revendications précédentes, dans lequel le conduit de lumière (4) peut être modelé, puisqu'il est suffisamment rigide pour maintenir la configuration adoptée après avoir été déformé.

5. Procédé selon l'une quelconque des revendications précédentes, dans lequel la surface de l'entrée (41) du conduit de lumière (4) possède une aire plus petite que la surface de la sortie (42) du conduit de lumière (4).

6. Procédé selon l'une quelconque des revendications précédentes, dans lequel l'appareil électroménager comprend des moyens (5) pour accoupler mécaniquement le conduit de lumière (4) à la porte (3) par interférence.

7. Procédé selon la revendication 6, dans lequel les moyens d'accouplement mécanique par interférence (5) comprennent un logement (50) formé le long du bord (30), l'entrée (41) du conduit de lumière (4) étant insérable dans le logement (50).

8. Procédé selon l'une quelconque des revendications précédentes, dans lequel au moins une portion du conduit de lumière (4) peut être découpée avec un outil coupant.

9. Procédé selon l'une quelconque des revendications précédentes, dans lequel l'appareil électroménager est un lave-vaisselle entièrement intégré, la lampe témoin (35) et le conduit de lumière (4) formant une partie des moyens pour indiquer l'état de progression du cycle de lavage.

10. Procédé selon l'une quelconque des revendications précédentes, dans lequel :
- les moyens de couverture (6) comportent une première portion (60) qui, lorsque la porte (3) se trouve dans la position de fermeture, surmonte verticalement le bord (30) de la porte (3) auquel est appliqué le conduit de lumière (4) ;
- les moyens de couverture (6) comportent une saillie (61) qui dépasse d'au moins une première partie (62) de la première portion (60) des moyens de couverture (6), la saillie (61) s'avançant vers le plan de référence (34) jusqu'à un plan vertical imaginaire (600) ;
- lorsque la porte (3) se trouve dans la position de fermeture, le conduit de lumière (4) dépasse du bord (30) de la porte (3) au moins jusqu'au plan imaginaire vertical (600), ledit conduit de lumière (4) pouvant être découpé avec un outil tranchant transversalement à la ligne de développement (40) en correspondance dudit plan imaginaire vertical (600) ;
le procédé comprenant l'étape de découpe du conduit de lumière (4) au niveau du plan vertical imaginaire (600).

11. Procédé selon la revendication 10, **caractérisé en ce que** une zone (63) de la première portion (60) des moyens de couverture (6) forme une partie de l'appareil électroménager (1) et fait face au bord (30) de l'appareil électroménager (1) auquel le conduit de lumière (4) est appliqué.
